# EUROPÄISCHE PATENTSCHRIFT

(11) **EP 1 820 919 B1**
(45) Veröffentlichungstag und Bekanntmachung des Hinweises auf die Patenterteilung: **17.07.2013**
(21) Anmeldenummer: 07011250.3
(22) Anmeldetag: 05.11.2004
(51) Int. Cl.: E04F 15/18, B32B 3/22, B32B 3/26, B32B 9/04, B32B 17/02

(54) **Mehrschichtiges Entkopplungssystem**
Multi-layered decoupling system
Système multicouche de désolidarisation

(30) Priorität: 06.11.2003 DE 20317248 U; 01.06.2004 DE 102004026652
(43) Veröffentlichungstag der Anmeldung: 22.08.2007
(62) Teilanmeldung aus: 04802688.4
(73) Patentinhaber: Blanke Gmbh & Co. Kg, 58642 Iserlohn-Stenglingsen (DE)
(72) Erfinder: Blanke, Peter, 58642 Iserlohn (DE); Thronicke, Sandro Gerd, 44532 Lünen (DE)
(74) Vertreter: Schneider, Uwe

(56) Entgegenhaltungen:
- EP-A- 0 386 324
- EP-A1- 0 275 454
- WO-A-99/54571
- DE-C1- 10 060 751
- DE-U1- 8 814 650
- DE-U1- 20 317 248
- FR-A- 2 774 715

## Beschreibung

Die Erfindung betrifft ein mehrschichtiges Entkopplungssystem, insbesondere für die Verlegung keramischer Beläge im Dünnbettverfahren gemäß Oberbegriff des Anspruches 1.

Keramische Beläge und insbesondere Fliesen werden heute üblicherweise im sogenannten Dünnbettverfahren verlegt, bei dem die keramischen Beläge in eine dünne Kleberschicht aus einem Fliesenmörtel verlegt werden. Dieses im Innenbereich zufriedenstellende Verfahren weist jedoch bei der Verarbeitung von keramischen Belägen im Außenbereich insofern Probleme auf, als die Feuchtigkeitsbelastung und die Temperaturbelastung derartiger Beläge nicht selten zu schleichender Zerstörung der Fliesen bzw. deren Verlegungsuntergründe führt, wodurch geringe Haltbarkeitszeiten derartiger Beläge nicht zu vermeiden sind und für die Sanierung hohe Kosten entstehen können. Auch führt durch den Fliesenbelag in den Untergrund eingedrungene Feuchtigkeit häufig zu Schäden am Bauwerk selbst, da die Feuchtigkeit nicht mehr frei entweichen kann. Dies ist besonders häufig bei Balkonabdichtungen festzustellen.

Auch ist durch die teilweise deutlich unterschiedlichen Ausdehnungskoeffizienten von Untergrund, Dünnbettmörtel und keramischem Belag durch die im Außenbereich auftretenden sehr hohen Temperaturdifferenzen zwischen hohen Temperaturen aufgrund Sonneneinstrahlung und niedrigeren Temperaturen bei Frost das Rißverhalten des keramischen Belages und des Untergrundes schwierig zu beherrschen. Es kommt daher häufig zu Rissen im Fliesenbelag, wenn der Fliesenbelag fest mit dem Untergrund verbunden wird.

Es ist daher schon vielfach vorgeschlagen worden, derartige im Außenbereich verlegte keramische Beläge dadurch haltbarer verlegen zu können, daß eine gezielte Entkopplung zwischen dem keramischen Belag und dem Unterbau herbeigeführt wird. Ein solches Entkopplungssystem sorgt zwar für die mechanische Entkopplung quer zur Verlegefläche, hat jedoch häufig den Nachteil, daß die mechanische Belastbarkeit des Fliesenbelages und des Entkopplungssystems nicht zufriedenstellend ist. Einerseits ist die Verankerung der Fliesen an dem Entkopplungssystem nicht hinreichend fest, andererseits ist die Druckfestigkeit des Entkopplungssystems selbst nicht optimal.

Eine derartige Gestaltung eines Entkopplungssystems mit Abdichtungswirkung ist aus der DE 100 60 751 C1 bekannt. Bei dieser Gestaltung wird ein Abdichtungs- und Drainagesystem vorgeschlagen, das unterseitig eine Kunststoff- oder Bitumenschicht aufweist, über der eine erste Vliesschicht aus einem ersten hydrophoben Polymer, darüber eine Drainageschicht aus einem zweiten hydrophoben Polymer und wiederum darüber eine zweite Vliesschicht aus dem ersten hydrophoben Polymer angeordnet sind. Dieser Schichtaufbau erlaubt zwar in gewissen Grenzen eine Abführung eingedrungener Feuchtigkeit aus dem Unterbau einer Fliesenschicht, doch ist die mechanische Belastbarkeit eines derartigen Schichtaufbaus nicht zufriedenstellend, da die Einbettung der obersten Vliesschicht in den Fliesenmörtel keine hinreichende Verankerungsfunktion bzw. Bewehrungsfunktion erlaubt. Die Drainageschicht ist hierbei als eine gitterartige Schicht ausgebildet, ohne das genaue Angaben zur Ausbildung der gitterartigen Schicht gemacht werden.

Aus der EP 0 386 324 A2 ist ein bituminöser Haftvermittler bekannt, der auf einer Bitumen-Trägerschicht eine vliesartige Schicht aufkaschiert hat, auf der wiederum ein gitterartiges Gewebe als Armierungsschicht zu besseren Befestigung eines Zementmörtels für eine darauf aufzubringende Fleisenschicht aufweist.

Aus der FR 2 774 715 A1 ist wie auch aus der DE 88 14 650.2 ein Schichtaufbau zur Rissüberbrückung mit einer gitterartigen Armierungsstruktur zur Einbettung von Fliesenmörtel bekannt.

Die WO 99/54571 A1 und die EP 0 275 454 A1 zeigen Gitterstrukturen, die aus flächigen Folien gebildet sind, die komplexe dreidimensional geformte Kavitäten aufweisen. Über diesen Gitterstrukturen sind Armierungsschichten aus netzartigen Geweben angeordnet.

Aufgabe der vorliegenden Erfindung ist es daher, ein gattungsgemäßes mehrschichtiges Entkopplungssystem derart weiterzubilden, daß eine Verbesserung der mechanischen Belastbarkeit und der Verankerung an der Fliesenschicht erreichbar ist.

Die Lösung der erfindungsgemäßen Aufgabe ergibt sich aus den kennzeichnenden Merkmalen des Anspruches 1 in Zusammenwirken mit den Merkmalen des Oberbegriffes. Weitere vorteilhafte Ausgestaltungen der Erfindung ergeben sich aus den Unteransprüchen.

Die Erfindung beschreibt ein mehrschichtiges Entkopplungssystem, insbesondere für die Verlegung keramischer Beläge im Dünnbettverfahren, aufweisend einen Schichtaufbau, aufgeführt von unten nach oben, aus einer auf einem Verankerungsvlies angeordneten, aus einem gitterartigen Strukturelement gebildeten Verankerungsschicht für eine im Bereich der Oberseite des Entkopplungssystems einzubringende, bei der Verarbeitung plastische und danach aushärtende Verfüllmasse sowie einer an der Verankerungsschicht zumindest abschnittsweise fest angeordneten Armierungsschicht. Hierbei ist insbesondere durch die oberseitig angeordnete Verankerungsschicht und die darüber aufgelegte und damit befestigte Armierungsschicht dafür gesorgt, daß ein oberseitig eingebrachter Fugenmörtel sich vollständig mit dem Entkopplungssystem verbindet und dabei dafür sorgt, daß eine entsprechende Belastbarkeit des Entkopplungssystems erzielt wird. Das gitterartige Strukturelement erlaubt hierbei einen besonders einfachen Aufbau der im wesentlichen die Dicke des Entkopplungssystems bestimmenden Verankerungsschicht. Die darunter angeordnete Schicht des Verankerungsvlieses erlaubt eine besonders gute Befestigung am Untergrund etwa über einen Mörtel oder Kleber, der auch auf z.B. bauwerksseitig dichte Untergründe aufgebracht werden und in den das Verankerungsvlies sicher eingebettet werden kann.

In einer ersten Ausgestaltung kann vorgesehen werden, daß das gitterartige Strukturelement aus stabförmig gitterartig zueinander angeordneten und aneinander an den Kreuzungspunkten des Gitters festgelegten Einzelstäben gebildet ist. Ein derartiges gitterartiges Strukturelement läßt sich einfach aus gleichartig vorfertigbaren Einzelstäben herstellen und man kann daher etwa kostengünstig extrudierte Einzelstäbe verarbeiten, die auf Trommeln aufgewickelt und für das Herstellen der gitterartigen Strukturelemente jeweils zueinander positioniert werden. Damit ist die Herstellung eines solchen gitterartigen Strukturelementes sehr kostengünstig und einfach. Anders als bei bekannten Entkopplungssystemen müssen keine aufwendigen Werkzeuge gefertigt werden, die zueinander abgewinkelte oder sonstwie verformte Bereiche herstellen. Hierbei kann in weiterer Ausgestaltung dafür gesorgt werden, daß die Einzelstäbe des gitterartigen Strukturelementes eine im wesentlichen rechteckige Querschnittsform aufweisen. Insbesondere wenn die Einzelstäbe ungleichförmige Abmessungen ihrer Kanten aufweisen, läßt sich die Dicke der gitterartigen Strukturelemente einfach verändern und an unterschiedliche Bedürfnisse anpassen.

Von besonderem Vorteil ist es, wenn die sich kreuzenden Einzelstäbe des gitterartigen Strukturelementes so angeordnet sind, daß eine erste Schicht aus jeweils gleich orientierten Einzelstäben unterhalb einer zweiten Schicht aus dazu in einem Winkel angeordneten, jeweils zueinander gleich orientierten Einzelstäben besteht. Somit entfällt bei der Herstellung des gitterartigen Strukturelementes die Notwendigkeit, die Einzelstäbe wie bei textilen Geweben jeweils zueinander zu verschränken, was die Herstellung weiter vereinfacht und zum anderen dafür sorgt, daß die gleichartigen Schichten der unteren und der oberen Lage der Einzelstäbe zwischen sich jeweils entsprechende Freiräume bilden, die für die Einbringung der Verfüllmasse genutzt werden können. Es ist hierbei denkbar, daß die gitterartige Struktur aus den Einzelstäben eine Rauten-, Rechteck- oder Quadratform aufweist. Auch andere geometrische Muster sind selbstverständlich denkbar.

Eine weitere Vereinfachung der Herstellung der Verankerungsschicht läßt sich erreichen, wenn die Einzelstäbe der beiden Schichten miteinander im Kreuzungsbereich unter mechanischem Druck verschweißt sind. Etwa kann durch Aufheizen der durch Temperatureinfluß plastisch verformbaren Einzelstäbe dafür gesorgt werden, daß im Berührungsbereich der Einzelstäbe eine Erweichung und ein Verschweißen mit dem jeweils darunter liegenden Einzelstab erfolgt und sich damit ein mattenartiger Verbund der Einzelstäbe ergibt.

Weiterhin ist es denkbar, daß etwa bei einem Verschweißen der Einzelstäbe die Einzelstäbe des gitterartigen Strukturelementes zu mindestens an den Kreuzungspunkten zueinander verkippte Kantenbereiche aufweisen, wodurch sich hinterschnittene Abschnitte an den Einzelstäben bilden. Durch das plastische Umformen der Einzelstäbe im Bereich der Kreuzungspunkte durch Temperatureinfluß kommt es dazu, daß die Einzelstäbe durch den mechanischen Druck ein wenig verformt werden und dadurch ihre Ausrichtung abhängig von der Lage des mit dem Einzelstab zu verbindenden anderen Einzelstabes verändern. Dies führt dazu, daß sich Hinterschneidungen bilden, die etwa für die Verankerung in der Verfüllmasse von besonderem Vorteil sind. Die Verfüllmasse dringt aufgrund ihrer Plastizität bei der Verarbeitung in diese Hinterschneidungsbereiche ein und kann nach dem Aushärten sich wesentlich besser an der Verankerungsschicht durch die Hinterschnitte der Einzelstäbe festhalten.

Weiterhin ist es in anderer Ausgestaltung denkbar, daß die Armierungsschicht auf der Verankerungsschicht aufgeschweißt oder auch aufgeklebt ist. Hierdurch kann die Armierungsschicht zum einen gut in die Verfüllmasse eingebettet werden, zum anderen hängt sie fest an der Verankerungsschicht, die ebenfalls mit der Verfüllmasse ausgefüllt wird. Damit ergibt sich ein besonders guter Verbund zwischen der Verfüllmasse und der Armierungsschicht bzw. der Verankerungsschicht. Es ist hierbei denkbar, daß die Armierungsschicht als ein gitterartiges Gewebe gebildet ist, vorzugsweise als ein Glasfasergewebe, das zur sicheren Verankerung mit der oberseitig des Entkopplungssystems einzubringenden Verfüllmasse dient.

Von Vorteil für die Verarbeitung größerer Flächen des Entkopplungssystems ist es, wenn die Armierungsschicht sich zu mindestens in einzelnen Randbereichen des Entkopplungssystems über die anderen Schichten hinaus erstreckt, um einen Übergang zu anderen Abschnitten des Entkopplungssystems zu schaffen. Hierdurch kann ein entsprechend überlappter Anschluß an den Rändern etwa einzeln verarbeitbarer Bahnen erreicht werden, der keinerlei Festigkeitsverlust an den Übergangsbereichen zwischen benachbarten Bahnen mit sich bringt.

Weiterhin ist es denkbar, daß das Entkopplungssystem lose auf einem Untergrund verlegbar ist. Hierdurch wird eine vollständige mechanische Entkopplung etwa eines aufgebrachten Fliesenbelages vom jeweiligen Untergrund erreicht, der etwa bei stark unterschiedlichen Temperatur-Ausdehnungskoeffizienten oder arbeitenden Untergründen wie etwa Holzböden notwendig ist.

In einer anderen Ausgestaltung ist es denkbar, daß das Entkopplungssystem fest, vorzugsweise verklebt auf einem Untergrund verlegbar ist. Hierdurch wird eine sichere Befestigung des Entkopplungssystems erreicht, wenn dies durch die Eigenschaften des Untergrundes zulässig und sinnvoll ist.

Hinsichtlich der Abmessungen der einzelnen Schichten des Entkopplungssystems ist es denkbar, daß die Dicke der Verankerungsschicht zwischen 2 und 6 Millimetern und damit in einer Ausgestaltung die Gesamtdicke des Entkopplungssystems im wesentlichen zwischen 2 und 8 Millimetern beträgt. Hierdurch trägt das Entkopplungssystem nicht wesentlich relativ zu einem vorgegebenen Untergrund auf und kann auch bei räumlichen knappen Einbauverhältnissen unproblematisch eingesetzt werden.

Es ist von wesentlichem Vorteil für die Benutzungseigenschaften des erfindungsgemäßen Entkopplungssystems, wenn die Verankerungsschicht nach dem Einbringen der Verfüllmasse im wesentlichen vollständig mit der Verfüllmasse ausgefüllt ist und die in die ausgehärtete Verfüllmasse eingebettete Armierungsschicht eine Versteifungs- und Bewehrungsfunktion für die Abtragung von oberhalb eingeleiteter mechanischer Belastungen erfüllt. Damit wird die Lastabtragung über wesentlich größere Schichtdicken als bei bekannten Entkopplungssystemen möglich, da zusätzlich noch die ganze Schichtdicke der Verankerungsschicht bei mechanischen Belastungen mitträgt und gleichzeitig durch die Armierungsschicht verstärkt ist.

Eine besonders bevorzugte Ausführungsform des erfindungsgemäßen Entkopplungssystems zeigt die Zeichnung.

Es zeigen:
- Figur 1: - einen Schnitt durch ein zu dem erfindungsgemäßen Entkopplungssystem gemäß Figur 4 ähnliches Entkopplungssystem mit einer zusätzlichen Abdichtungsschicht, wobei mit diesem ähnlichen Entkopplungssystem das Verständnis der vorliegenden Erfindung erleichtert wird,
- Figur 2: - eine Draufsicht auf ein Entkopplungssystem gemäß Figur 1,
- Figur 3: - Anordnung von Überlappungsbereichen für Armierungsschicht und Abdichtungsschicht an einem Entkopplungssystem gemäß Figur 1,
- Figur 4: - einen Schichtaufbau des erfindungsgemäßen Entkopplungssystems, ausgestattet unterseitig mit einem Verankerungsvlies.

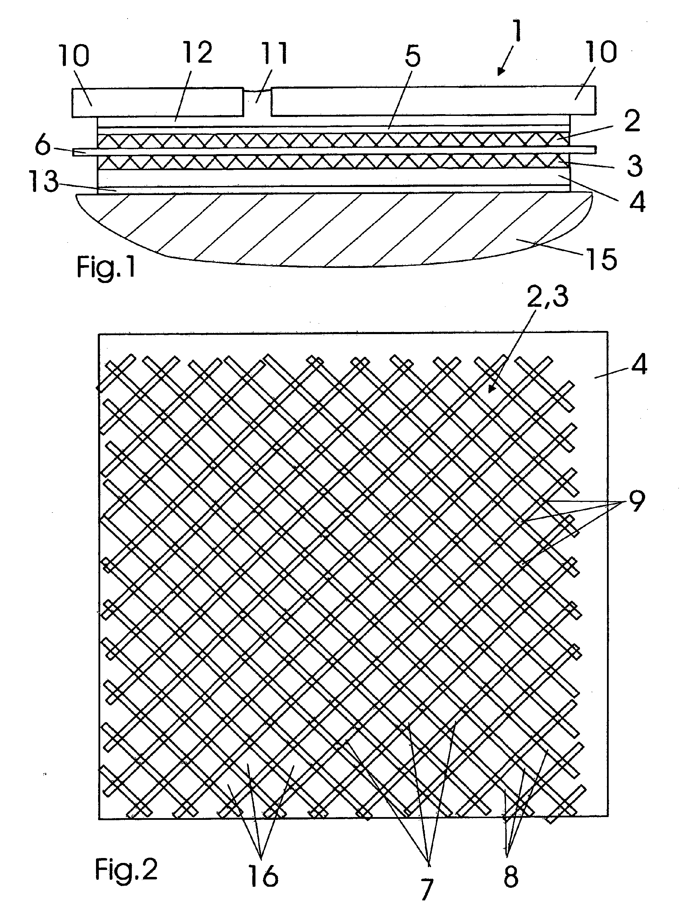

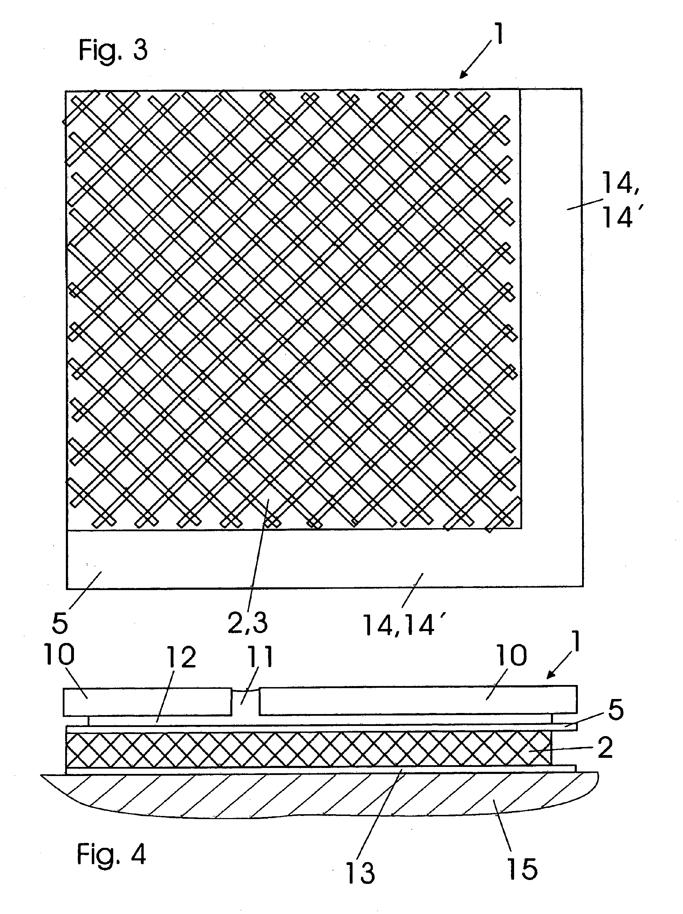

In der Figur 1 ist in einer geschnittenen Seitenansicht der Schichtaufbau eines zu dem erfindungsgemäßen Entkopplungssystem gemäß Figur 4 ähnliches Entkopplungssystem mit einer zusätzlichen Abdichtungsschicht aufgezeigt, wobei mit diesem ähnlichen Entkopplungssystem das Verständnis der vorliegenden Erfindung erleichtert wird. In der Figur 2 ist eine geschnittene Draufsicht etwa in Höhe einer Abdichtungsschicht 4 zu erkennen und in der Figur 3 ist eine Draufsicht auf das Entkopplungssystem 1 geschnitten entlang der Armierungsschicht 5 dargestellt. Das Entkopplungssystem 1 ist in der Figur 1 im Einbauzustand auf einem Untergrund 15, etwa einem Zementestrich oder dergleichen dargestellt, wobei oberhalb des Entkopplungssystems 1 ein Fliesenbelag aus Fliesen 10 zu erkennen ist, der im Dünnbettverfahren in einem Fliesenmörtel 12 verlegt ist, wobei die Fugen 11 zwischen den einzelnen Fliesen 10 ebenfalls mit dem Fliesenmörtel 12 ausgefüllt sind.

Das Entkopplungssystem 1 besteht dabei aus einer hier als zusätzliche Option abgebildeten, nicht zwingend notwendigen und auf dem Untergrund 15 aufliegenden Abdichtungsschicht 4, die beispielsweise aus einem Polyethylen gebildet ist und als Bahn bestimmter Breite verlegt werden kann. Die Abdichtungsschicht 4 kann dabei mit dem Untergrund 15 verklebt sein, ebenfalls ist es denkbar, zur Entkopplung von Untergrund 15 und Fliesenbelag aus den Fliesen 10 die Abdichtungsschicht 4 auf dem Untergrund 15 nur schwimmend aufzulegen. Derartige Verlegeverfahren sind grundsätzlich bekannt und sollen daher hier nicht weiter behandelt werden.

Oberhalb dieser Abdichtungsschicht 4 ist eine Verankerungsschicht 2, 3 aus einer noch später erläuterten gitterartigen Struktur mit der Abdichtungsschicht 4 verbunden. Die Verbindung kann beispielsweise durch Verkleben oder Verschweißen in grundsätzlich bekannter Weise abhängig von den verwendeten Materialien erfolgen. Diese Verankerungsschicht 2, 3 ist aus zwei einzelnen Schichten 2, 3 gebildet, zwischen denen eine Dampfdruckausgleichsschicht 6 in noch näher beschriebener Weise angeordnet werden kann.

Die Verankerungsschicht 2, 3 ebenso wie die mit ihr verbundene und oberhalb angeordnete Armierungsschicht 5 dient zur Verankerung des Entkopplungssystems 1 an dem Fliesenmörtel 12 und damit der Schicht aus den Fliesen 10. Die Armierungsschicht 5 kann beispielsweise in grundsätzlich bekannter Weise aus einem gitterartig angeordneten Glasfasergewebe bestehen, das entsprechende Öffnungen und freie Bereiche aufweist, damit der Fliesenmörtel 12 möglichst tief in die Verankerungsschicht 2, 3 eintreten kann. Die Verankerungsschicht 2, 3 weist dabei in noch näher beschriebener Weise Aufnahmeräume 16 für den Fliesenmörtel 12 auf und dient damit zur Verbesserung der Verankerung des Fliesenmörtels 12 an dem mehrschichtigen Entkopplungssystem 1.

Die Festlegung der Fliesenschicht aus den Fliesen 10 erfolgt hierbei dadurch, daß der Fliesenmörtel 12 vor dem Auflegen der Fliesen 10 oberseitig auf die Armierungsschicht 5 aufgebracht und mit einer Kelle möglichst tief durch die Öffnungen der Armierungsschicht 5 in die Verankerungsschicht 2 bzw. 3 bei Fehlen der optionalen Dampfdruckausgleichsschicht 6 hinein gedrückt wird. Ist die Dampfdruckausgleichsschicht 6 vorhanden, so wird nur die Verankerungsschicht 2 von dem Fliesenmörtel 12 ausgefüllt. Der im plastischen Zustand verarbeitete Fliesenmörtel 12 füllt hierbei die Aufnahmeräume 16 in der Verankerungsschicht 2, 3 weitgehend aus und umfließt dabei die in noch näher beschriebener Weise gebildeten Einzelstäbe 7, 8 der Verankerungsschicht 2, 3 nahezu vollständig. Nach dem Aushärten des Fliesenmörtels 12 hat sich ein sehr fester Verband zwischen der Verankerungsschicht 2, der Armierungsschicht 5 und dem Fliesenmörtel 12 gebildet, der zum einen die Fliesen 10 fest an dem Entkopplungssystem 1 verankert und zum anderen eine stabile, plattenartigen Ausgestaltung der Verankerungsschicht 2, 3 hervorruft. Dadurch ist das Entkopplungssystem 1 besonders gut belastbar durch oberseitig der Fliesen 10 aufgebrachte mechanische Belastungen.

Die gitterartige Struktur der Verankerungsschicht 2, 3 wird hierbei aus unter einem Winkel zueinander angeordneten Einzelstäben 7, 8 gebildet, die übereinander angeordnet eine zweilagige Schichtanordnung aus den Schichten 2 und 3 bilden. Die Einzelstäbe 7, 8 weisen jeweils einen etwa rechteckigen Querschnitt auf und sind an den Kreuzungspunkten 9 etwa durch thermische Verfahren miteinander verschweißt. Hierdurch bildet sich auf einfachste Weise eine Übereinanderordnung von etwa parallele Scharen der Einzelstäbe 7, die mit ebenfalls parallelen Scharen der Einzelstäbe 8, die unter einem Winkel zu der Schar der Einzelstäbe 7 liegen, verbunden sind. Zwischen den Einzelstäben 7 bzw. 8 bilden sich die Aufnahmeräume 16 in der Verankerungsschicht 2, 3.

Die gitterartige Struktur aus den Einzelstäben 7, 8 hat weiterhin den Vorteil, daß im Bereich der Kreuzungspunkte 9 beim Verschweißen der Einzelstäbe 7, 8 sich Bereiche an den Einzelstäben 7, 8 bilden, die Hinterschnitte aufweisen und daher zu einer sehr starken Verklammerung des in diese Bereiche eintretenden Fliesenmörtels 12 mit den Einzelstäben 7, 8 nach dem Erhärten führen.

Wenn größere Flächen verarbeitet werden sollen, empfiehlt es sich, sowohl die Armierungsschicht 5 als auch die Abdichtungsschicht 4 in Überlappungsbereichen 14, 14' soweit über die Berandung der gitterartigen Verankerungsschicht 2, 3 hinüber ragen zu lassen, daß sie mit benachbart anzuordnenden entsprechenden Schichten überlappend etwa verklebt oder sonstwie an diesen befestigt werden können.

Es versteht sich von selbst, daß die in den Figuren 2 und 3 aufgezeigte Anordnung der Einzelstäbe 7, 8 nur beispielhaft anzusehen ist und sich jegliche Art von geometrischen Mustern aus solchen Einzelstäben 7, 8 bilden lassen, die von Vorteil für die Eigenschaften des hier genannten Entkopplungssystems 1 ist.

Zwischen die beiden Schichten 2 und 3 der Verankerungsschicht kann eine zusätzliche Dampfdruckausgleichsschicht 6 eingelegt sein, die direkt bei der Herstellung der gitterartigen Struktur der Verankerungsschicht 2, 3 mit eingebracht werden kann. Hierdurch kann auch eine besonders einfache und sichere Festlegung der Dampfdruckausgleichsschicht 6 in dem Schichtaufbau des Entkopplungssystems 1 erfolgen. Derartige Dampfdruckausgleichsschichten 6 sind grundsätzlich bekannt und sollen daher hier nicht näher erläutert werden.

Unterhalb der Abdichtungsschicht 4 kann in grundsätzlich bekannter Weise eine Vliesschicht 13 vorgesehen werden, die auf die Abdichtungsschicht 4 aufkaschiert oder in sonst bekannter Weise an der Abdichtungsschicht 4 befestigt ist und für den Fall des Verklebens der Abdichtungsschicht 4 mit dem Untergrund 15 eine besonders gute Befestigung am Untergrund 15 etwa über einen Mörtel oder Kleber erlaubt. In der Figur 4 ist nun eine besonders vorteilhafte Ausgestaltung des erfindungsgemäßen Entkopplungssystems 1 dargestellt, bei der die Dampfdruckausgleichsschicht 6 des Entkopplungssystems 1 der Figuren 1 bis 3 nicht vorhanden ist und anstelle der Abdichtungsschicht 4 nur eine Vliesschicht 13 zur Auflage auf dem Untergrund 15 vorgesehen ist. Hierdurch kann für nicht feuchtigkeitsempfindliche Untergründe 15, etwa bauwerksseitig dichte Untergründe 15 der Aufbau des Entkopplungssystems 1 weiter vereinfacht werden, ohne daß die Entkopplungswirkung darunter leidet. Ansonsten gelten für die Eigenschaften der Schichten die vorstehend gemachten Angaben in entsprechender Weise.

**Sachnummernliste**

| | |
|---|---|
| 1 | Entkopplungssystem |
| 2 | Verankerungsschicht |
| 3 | Verankerungsschicht |
| 4 | Abdichtungsschicht |
| 5 | Armierungsschicht |
| 6 | Dampfdruckausgleichsschicht |
| 7 | Einzelstab |
| 8 | Einzelstab |
| 9 | Kreuzungsbereich |
| 10 | Fliese |
| 11 | Fuge |
| 12 | Fliesenmörtel |
| 13 | Verankerungsvlies |
| 14 | Überlappungsbereich |
| 15 | Untergrund |
| 16 | Aufnahmeräume |

## Patentansprüche

1. Mehrschichtiges Entkopplungssystem (1), insbesondere für die Verlegung keramischer Beläge (10) im Dünnbettverfahren (12),
bei dem oberhalb eines Verankerungsvlieses (13) eine aus einem gitterartigen Strukturelement gebildete Verankerungsschicht (2) für die Einbringung einer im Bereich der Oberseite des Entkopplungsystems (1) einzubringenden, bei der Verarbeitung plastischen und danach innerhalb der Verankerungsschicht (2) aushärtenden Verfüllmasse (12) angeordnet ist,
und das gitterartige Strukturelement (2) aus stabförmig gitterartig zueinander angeordneten und aneinander an den Kreuzungspunkten (9) des Gitters festgelegten Einzelstäben (7, 8) gebildet ist,
**dadurch gekennzeichnet, daß**
über der Verankerungsschicht (2) eine Armierungsschicht (5) zumindest abschnittsweise fest angeordnet ist,
wobei die sich kreuzenden Einzelstäbe (7, 8) des gitterartigen Strukturelementes (2) so angeordnet sind, daß eine erste Schicht aus jeweils gleich orientierten Einzelstäben (7) unterhalb einer zweiten Schicht aus dazu in einem Winkel angeordneten, jeweils zueinander gleich orientierten Einzelstäben (8) besteht.

2. Entkopplungssystem (1) gemäß Anspruch 1, **dadurch gekennzeichnet, daß** die Einzelstäbe (7, 8) des gitterartigen Strukturelementes (2) eine im wesentlichen rechteckige Querschnittsform aufweisen.

3. Entkopplungssystem (1) gemäß einem der Ansprüche 1 oder 2, **dadurch gekennzeichnet, daß** die gitterartige Struktur aus den Einzelstäben (7, 8) eine Rauten-, Rechteck- oder Quadratform aufweist.

4. Entkopplungssystem (1) gemäß einem der Ansprüche 1 bis 3, **dadurch gekennzeichnet, daß** die Einzelstäbe (7, 8) der beiden Schichten miteinander im Kreuzungsbereich (9) unter mechanischem Druck verschweißt sind.

5. Entkopplungssystem (1) gemäß einem der Ansprüche 1 bis 4, **dadurch gekennzeichnet, daß** die Einzelstäbe (7, 8) des gitterartigen Strukturelementes (2) zu mindestens an den Kreuzungspunkten (9) zueinander verkippte Kantenbereiche aufweisen, wodurch sich hinterschnittene Abschnitte an den Einzelstäben (7, 8) bilden.

6. Entkopplungssystem (1) gemäß einem der vorstehenden Ansprüche, **dadurch gekennzeichnet, daß** die Armierungsschicht (5) auf der Verankerungsschicht (2) aufgeschweißt ist.

7. Entkopplungssystem (1) gemäß einem der Ansprüche 1 bis 5, **dadurch gekennzeichnet, daß** die Armierungsschicht (5) auf der Verankerungsschicht (2) aufgeklebt ist.

8. Entkopplungssystem (1) gemäß einem der vorstehenden Ansprüche, **dadurch gekennzeichnet, daß** die Armierungsschicht (5) ein gitterartig gebildetes Gewebe, vorzugsweise ein Glasfasergewebe, aufweist zur sicheren Verankerung mit der oberseitig des Entkopplungssystems (1) einzubringenden Verfüllmasse (12).

9. Entkopplungssystem (1) gemäß einem der vorstehenden Ansprüche, **dadurch gekennzeichnet, daß** die Armierungsschicht (5) sich zu mindestens in einzelnen Randbereichen (14) des Entkopplungssystems (1) über die anderen Schichten (2, 6) hinaus erstreckt, um einen Übergang zu anderen Abschnitten des Entkopplungssystems (1) zu schaffen.

10. Entkopplungssystem (1) gemäß einem der vorstehenden Ansprüche, **dadurch gekennzeichnet, daß** das Entkopplungssystem (1) lose auf einem Untergrund (15) verlegbar ist.

11. Entkopplungssystem (1) gemäß einem der Ansprüche 1 bis 9, **dadurch gekennzeichnet, daß** das Entkopplungssystem (1) fest, vorzugsweise verklebt auf einem Untergrund (15) verlegbar ist.

12. Entkopplungssystem (1) gemäß einem der vorstehenden Ansprüche, **dadurch gekennzeichnet, daß** die Dicke der Verankerungsschicht (2) zwischen 2 und 6 Millimetern beträgt.

13. Entkopplungssystem (1) gemäß einem der vorstehenden Ansprüche, **dadurch gekennzeichnet, daß** die Gesamtdicke des Entkopplungssystems (1) zwischen 2 und 8 Millimetern beträgt.

14. Entkopplungssystem (1) gemäß einem der vorstehenden Ansprüche, **dadurch gekennzeichnet, daß** die Verankerungsschicht (2) nach dem Einbringen der Verfüllmasse (12) im wesentlichen vollständig mit der Verfüllmasse (12) ausgefüllt ist und die in die ausgehärtete Verfüllmasse (12) eingebettete Armierungsschicht (5) eine Versteifungs- und Bewehrungsfunktion für die Abtragung von oberhalb eingeleiteter mechanischer Belastungen erfüllt.

## Claims

1. A multilayer decoupling system (1), in particular for laying ceramic paving (10) by using a thin-bed method (12),
in which above a non woven anchoring material (13) is arranged an anchoring layer (2) formed from a lattice-type structural element for incorporating filler material (12) in the region of the upper surface of the decoupling system (1), which filler material (12) is plastic when being applied and subsequently hardens within the anchoring layer (2),
and the lattice-type structural element (2) is formed from individual rods (7, 8) that are disposed to one another in the manner of a lattice and fixed to one another at the points of intersection (9) of the lattice.
**characterized in that**
a reinforcing layer (5) is arranged rigidly above the anchoring layer (2), at least in sections,
wherein the intersecting individual rods (7, 8) of the lattice-type structural element (2) are so arranged that a first layer consists of identically oriented individual rods (7) beneath a second layer of individual rods (8) that are disposed at an angle thereto and are in each instance oriented identically to one another.

2. Decoupling system (1) as defined in Claim 1, **characterized in that** the individual rods (7, 8) of the lattice-type structural element (2) are of an essentially rectangular cross section.

3. Decoupling system (1) as defined in one of the Claims 1 or 2, **characterized in that** the lattice-type structure of the individual rods (7, 8) is in the form of a rhombus, a rectangle, or a square.

4. Decoupling system (1) as defined in one of the Claims 1 to 3, **characterized in that** the individual rods (7, 8) of the two layers are welded to one another at the points of intersection (9) when under mechanical pressure.

5. Decoupling system (1) as defined in one of the Claims 1 to 4, **characterized in that** the individual rods (7, 8) of the lattice-type structural element (2) have edge areas that are slanted towards one another, at least at their points of intersection (9), thereby forming undercut sections on the individual rods (7, 8).

6. Decoupling system (1) as defined in one of the preceding claims, **characterized in that** the reinforcing layer (5) is welded onto the anchoring layer (2).

7. Decoupling system (1) as defined in one of the Claims 1 to 5, **characterized in that** the reinforcing layer (5) is cemented onto the anchoring layer (2).

8. Decoupling system (1) as defined in one of the preceding claims, **characterized in that** the reinforcing layer (5) contains a lattice-type textile, preferably a glass-fibre textile, for secure anchoring with the filler material (12) that is to be incorporated from the top area of the decoupling system (1).

9. Decoupling system (1) as defined in one of the preceding claims, **characterized in that** the reinforcing layer (5) extends beyond the other layers (2, 6) at least in individual edge areas (14) of the decoupling system (1) so as to create a transition to other sections of the decoupling system (1).

10. Decoupling system (1) as defined in one of the preceding claims, **characterized in that** the decoupling system (1) can be laid so as to float on a substratum (15).

11. Decoupling system (1) as defined in one of the Claims 1 to 9, **characterized in that** the decoupling system (1) is laid rigidly, preferably cemented, on a substratum (15).

12. Decoupling system (1) as defined in one of the preceding claims, **characterized in that** the thickness of the anchoring layer (2) is between 2 and 6 mm.

13. Decoupling system (1) as defined in one of the preceding claims, **characterized in that** the overall thickness of the decoupling system (1) is between 2 and 8 mm.

14. Decoupling system (1) as defined in one of the preceding claims, **characterized in that** after the incorporation of the filler material (12), the anchoring layer (2) is essentially completely filled with the filler material (12) and the reinforcing layer (5) that is imbedded in the hardened filler material (12) performs a stiffening and reinforcing function with respect to mechanical loads applied from above.

## Revendications

1. Système multicouche de désolidarisation (1), en particulier pour la pose de revêtements (10) céramique dans le procédé à lit mince (12),
avec une couche d'ancrage (2) formée d'un élément de structure de type grille étant disposée au-dessus d'un non-tissé d'ancrage (13) pour l'introduction d'une masse de remplissage (12) à introduire dans la zone du côté supérieur du système de désolidarisation (1), plastique lors du traitement et durcissant ensuite à l'intérieur de la couche d'ancrage (2),
et l'élément de structure (2) de type grille est formé de barres individuelles (7, 8) disposées à la façon d'une grille en forme de barre les unes par rapport aux autres et fixées les unes aux autres aux points de croisement (9) de la grille.
caractérisé en ce
une couche d'armature (5) est disposée de façon fixe au moins par endroits au-dessus de la couche d'ancrage (2),
les barres individuelles (7, 8) qui se croisent de l'élément de structure (2) en forme de grille, sont disposées de telle sorte qu'une première couche comprend des barres individuelles (7) orientées respectivement de façon identique au-dessous d'une seconde couche constituée de barres individuelles (8) disposées les unes par rapport aux autres en formant un angle et orientées à chaque fois dans le même sens les unes par rapport aux autres.

2. Système de désolidarisation (1) selon la revendication 1, **caractérisé en ce que** les barres individuelles (7, 8) de l'élément de structure (2) de type grille présentent une forme de section sensiblement rectangulaire.

3. Système de désolidarisation (1) selon l'une quelconque des revendications 1 ou 2, **caractérisé en ce que** la structure en forme de grille constituée des barres individuelles (7, 8) présente une forme de losange, de rectangle ou de carré.

4. Système de désolidarisation (1) selon l'une quelconque des revendications 1 à 3, **caractérisé en ce que** les barres individuelles (7, 8) des deux couches sont soudées les unes avec les autres dans la zone de croisement (9) sous l'effet de pression mécanique.

5. Système de désolidarisation (1) selon l'une quelconque des revendications 1 à 4, **caractérisé en ce que** les barres individuelles (7, 8) de l'élément de structure (2) de type grille présentent des zones d'arête basculées les unes par rapport aux autres au moins aux points de croisement (9), de sorte que des parties contre-dépouillées se forment sur les barres individuelles (7, 8).

6. Système de désolidarisation (1) selon l'une quelconque des revendications précédentes, **caractérisé en ce que** la couche d'armature (5) est soudée sur la couche d'ancrage (2).

7. Système de désolidarisation (1) selon l'une quelconque des revendications 1 à 5, **caractérisé en ce que** la couche d'armature (5) est collée sur la couche d'ancrage (2).

8. Système de désolidarisation (1) selon l'une quelconque des revendications précédentes, **caractérisé en ce que** la couche d'armature (5) présente un tissu formé en forme de grille, de préférence un tissu de fibre de verre, pour l'ancrage sûr avec la masse de remplissage (12) à introduire côté supérieur du système de désolidarisation (1).

9. Système de désolidarisation (1) selon l'une quelconque des revendications précédentes, **caractérisé en ce que** la couche d'armature (5) s'étend au moins dans certaine zones périphériques (14) du système de désolidarisation (1) au-delà des autres couches (2, 6), afin de créer une transition avec d'autres parties du système de désolidarisation (1).

10. Système de désolidarisation (1) selon l'une quelconque des revendications précédentes, **caractérisé en ce que** le système de désolidarisation (1) peut être posé de façon libre sur un substrat (15).

11. Système de désolidarisation (1) selon l'une quelconque des revendications 1 à 9, **caractérisé en ce que** le système de désolidarisation (1) peut être posé de façon fixe, de préférence collé sur un substrat (15).

12. Système de désolidarisation (1) selon l'une quelconque des revendications précédentes, **caractérisé en ce que** l'épaisseur de la couche d'ancrage (2) se situe entre 2 et 6 millimètres.

13. Système de désolidarisation (1) selon l'une quelconque des revendications précédentes, **caractérisé en ce que** l'épaisseur globale du système de désolidarisation (1) se situe entre 2 et 8 millimètres.

14. Système de désolidarisation (1) selon l'une quelconque des revendications précédentes, **caractérisé en ce que** la couche d'ancrage (2) est remplie sensiblement complètement avec la masse de remplissage (12) après l'introduction de la masse de remplissage (12) et la couche d'armature (5) enfoncée dans la masse de remplissage (12) durcie assume une fonction de rigidification et d'armature pour l'enlèvement de sollicitations mécaniques appliquées au-dessus.
